# EUROPEAN PATENT SPECIFICATION

(11) **EP 2 775 777 B1**
(45) Date of publication and mention of the grant of the patent: **20.01.2016**
(21) Application number: 14162008.8
(22) Date of filing: 18.08.2006
(51) Int. Cl.: H04W 76/02

(54) **MOBILE RADIO COMMUNICATIONS DEVICE AND RELATED METHOD AND SYSTEM**
MOBILES FUNKKOMMUNIKATIONSGERÄT UND ENTSPRECHENDES VERFAHREN UND SYSTEM
DISPOSITIF DE RADIOCOMMUNICATIONS MOBILES, PROCÉDÉ ET SYSTÈME CONNEXES

(30) Priority: 18.08.2005 GB 0516985
(43) Date of publication of application: 10.09.2014
(62) Divisional of application: 06796765.3
(73) Proprietor: NEC Corporation, Minato-ku, Tokyo 108-8001 (JP)
(72) Inventor: Roberts, Michael, 92200 Neuilly Sur Seine (FR)
(74) Representative: Gill, David Alan

(56) References cited:
- "3rd Generation Partnership Project; Technical Specification Group RAN; Signalling enhancements for Circuit-Switched (CS) and Packet-Switched (PS) Connections; Analyses and Recommendations (Release 7)", 3GPP STANDARD; 3GPP TR 25.815, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.2.1, 1 May 2005 (2005-05-01), pages 1-19, XP050380968,
- NOKIA: "Setting up F-DPCH and E-DCH in RRC connection setup", 3GPP DRAFT; R2-051685, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20050519, 19 May 2005 (2005-05-19), XP050128851, [retrieved on 2005-05-19]
- "Use of HSDPA and EDCH for CS signalling", 3GPP DRAFT; R2-052022 USE OF HSDPA AND EDCH FOR CS SIGNALLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. London, UK; 20050824, 24 August 2005 (2005-08-24), XP050129157,

## Description

The present invention relates to a mobile radio communications device and related method and system employing a mobile radio communications device network.

Mobile radio communication device networks employ a variety of forms of signalling for exchanges between the mobile radio communications devices connected to the network and network elements such as the radio network controller. For current so-called third generation networks, the Third Generation Partnership Project (3GPP) has defined, by way of an on-going series of releases, a variety of standards to which network operators and equipment suppliers must conform.

Within a mobile radio communications device network, a requirement for Circuit Switch (CS) signalling often arises although the current manner of user equipment and network operation and signalling is such as to exhibit disadvantageous limitations.

For example, from the release R99 according to the 3GPP, problems arise in relation to the Dedicated Physical Channel (DPCH) employed in accordance with that release. For example, it is found that, at a transmission speed of 3.4 kbps, the DPCH can prove disadvantageously slow leading likewise to a disadvantageous delay in CS call set-up times. Yet further, CS signalling capacity limitations are also experienced.

Further, through the use of an Enhanced Uplink Dedicated Channel (EDCH) and which is found from the release Rel-6 of the 3GPP specification, further limitations can arise relating to the Radio Network Controller (RNC) processing load. In accordance with Rel-6, the RNC is required to allocate a R99 DPCH and also an EDCH in order to increase the signalling speed. Of course, in order to achieve such allocation of the R99 DPCH and the EDCH, it is necessary to disadvantageously double the Radio Resource Management (RRM) requirements.

Also, although F-DPCH was introduced in Rel-6 in an attempt to limit code resource requirements within the packet switched domain, the above-mentioned problems associated with the use of the DPCH in relation to the CS domain have not been addressed.

From the document "3rd Generation Partnership Project; Technical Specification Group RAN; Signalling enhancements for Circuit Switched (CS) and Packet-Switched (PS) Connections; Analysis and Recommendations (Release 7)", 3GPP STANDARD; 3GPP TR 25.815, V0.2.1, 1 May 2005, pages 1-19*, XP050380968* there is disclosed the provision of a mobile radio communications device comprising means for determining if a circuit switch signalling is being established and an arrangement for generating and sending a connection request to a network controller.

Also, from the document NOKIA: "Setting up F-DPCH and E-DCH in RRC connection setup", 3GPP DRAFT; R2-051685, 19 May 2005*, XP050128851* disclosing means for adding information identifying support for at least one of a High Speed Downlink Packet Access channel and an Enhanced Uplink Dedicated Channel.

The above-mentioned problems lead to disadvantageous performance limitations and inefficiencies.

The present invention seeks to provide for a mobile radio communications device and related method and system of operation, and related network devices, having advantages over known such devices, methods and systems.

According to a first aspect of the present invention, there is provided a mobile radio communications device comprising:
means for determining if a circuit switched signalling is being established;
means for generating connection-request signalling including, when said mobile radio communications device is establishing circuit switched signalling, information which identifies support for at least one of a High Speed Downlink Packet Access channel and an Enhanced Uplink Dedicated Channel; and
means for sending the connection request to a network controller.

According to another aspect of the present invention, there is provided a method in a mobile radio communications device comprising:
determining if circuit switched signalling is being established;
generating connection request signalling including, when said mobile radio communication device is establishing circuit switched signalling, information which identifies support for at least one of a High Speed Downlink Packet Access Channel and an Enhanced Uplink Dedicated Channel;
sending the connection request to a network controller.

As will be appreciated from the further discussion below, the present invention is advantageous since, in allowing for a selection of High Speed Downlink Packet Access and/or Enhanced Uplink Dedicated Channel bearers for initial circuit switched signalling exchanges, the above-mentioned speed limitations and inefficiencies can advantageously be reduced.

To enhance the manner in which the present invention provides an improvement to the prior art discussed above, it is advantageous that the mobile radio communications device indicate as early as possible its support for the High Speed Downlink Packet Access channel and/or the Enhanced Uplink Dedicated Channel so that the radio network controller can then allocate such channels for circuit switch signalling in a timely fashion.

The present invention is advantageously arranged to take advantage of signalling-support characteristics of a High Speed Downlink Packet Access channel or an Enhanced Uplink Dedicated Channel and arranged for use in relation to circuit switched signalling.

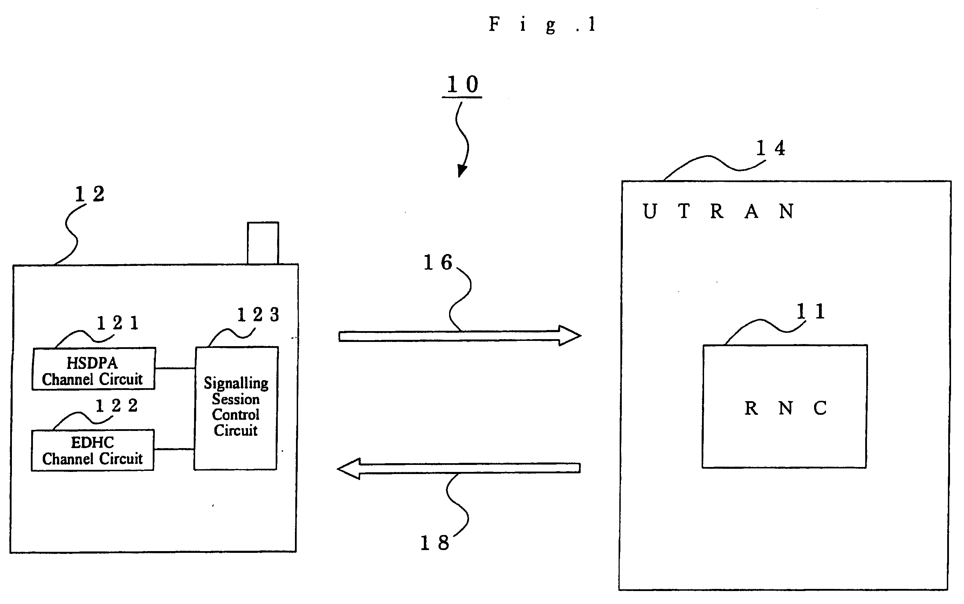

The invention is described further hereinafter with reference to the accompanying drawing in which illustrates a radio communications device system, and related operational elements, according to an embodiment of the present invention.

Within Fig.l, there is illustrated a mobile radio communications system 10 as part of a mobile radio communications network and employing user equipment 12 in the form of a mobile radio communications device handset a UMTS Terrestrial Radio Access Network (UTRAN) 14 and, signalling 16, 18 arising in accordance with an embodiment of the present invention for establishment of signal switched signalling.

Initially, when the user handset 12 is required to send a connection management service request for establishing circuit switched signalling, which of course may arise either through responding to paging signals received at the handset 12 or, through the handset 12 seeking to initiate the communication session. The handset 12 is arranged to indicate its support for HSDPA and/or EDCH channels. It includes HSDPA channel circuit 121 and EDCH channel circuit 122. Such signalling is indicated by arrow 16 and is delivered to a RNC 11 of the UTRAN 14. The handset 12 is further arranged to provide an indication that a circuit switched signalling session control circuit 123 is also required.

The signaling session control circuit 123 carries the signalling to the RNC to support of at least one of the those channel and determines a circuit switched connection between the HSDPA channel circuit 121 or EDCH channel circuit 122 which is required.

Upon receipt of the signal 16 from the signalling session control circuit 123 of the handset 12, the RNC 11 within the UTRAN 14 is arranged to employ such information immediately to select HSDPA and/or EDCH bearers which are then allocated to the handset 12 for support of the required circuit switched signalling exchanges.

The initial stages of the circuit switched signalling from the signaling session control circuit 123 of the handset 12 to the network therefore occur on one of the HSDPA and EDCH channel circuits 121 and 122, and so the speed-limitations and inefficiencies arising within the prior-art are therefore advantageously reduced.

During subsequent operation of the initial stages of the circuit switched signalling exchanges, and once the conventional circuit switched bearer is located for allocation to the signalling exchange, the RNC 11 can be arranged to allocate such a conventional Dedicated Control Channel (DCCH) and other related Dedicated Channels (DCH) and upon which the ongoing circuit switched signalling exchanges can continue.

Through the support of HSDPA and EDCH channels at the handset 12, it will be appreciated that advantageously relatively high speeds, for example 2Mbps for HSDPA cat.5 channels, and EDCH channels, are available. As a further aspect of the illustrated embodiment, the RNC 11 within the UTRAN 40 can be arranged to modify the measurement requirements to adapt cell configuration having regard to the particular circuit switched services required.

Thus, as can be appreciated the concept of the present invention, by employing HSDPA and EDCH bearers to carry CS signalling between a mobile radio communications device and a related network, can lead to advantages in the manner in which at least initial stages of CS signalling from a handset are handled.

## Claims

1. A mobile radio communications device (12) comprising:
means for determining if circuit switched signalling is being established;
means for generating connection-request signalling including, when said mobile radio communications device (12) is establishing circuit switched signalling, information which identifies support for at least one of a High Speed Downlink Packet Access channel and an Enhanced Uplink Dedicated Channel; and
means for sending the connection request to a network controller (11).

2. A method in a mobile radio communications device (12) comprising:
determining if circuit switched signalling is being established;
generating connection request signalling including, when said mobile radio communication device (12) is establishing circuit switched signalling, information which identifies support for at least one of a High Speed Downlink Packet Access Channel and an Enhanced Uplink Dedicated Channel;
sending the connection request to a network controller (11).

## Patentansprüche

1. Mobilfunkkommunikationsgerät (12), das Folgendes umfasst:
Mittel zum Ermitteln, ob leitungsgeschaltete Signalgabe eingerichtet wird;
Mittel zum Erzeugen von Verbindungsanforderungssignalen, die, wenn das genannte Mobilfunkkommunikationsgerät (12) leitungsgeschaltete Signalgabe einrichtet, Informationen beinhalten, die Unterstützung für einen Hochgeschwindigkeits-Downlink-Paketzugangs-Kanal und/oder einen erweiterten dedizierten Uplink-Kanal identifizieren; und
Mittel zum Senden der Verbindungsanforderung zu einem Netzwerk-Controller (11).

2. Verfahren in einem Mobilfunkkommunikationsgerät (12), das Folgendes beinhaltet:
Ermitteln, ob leitungsgeschaltete Signalgabe eingerichtet wird;
Erzeugen von Verbindungsanforderungssignalen, die, wenn das genannte Mobilfunkkommunikationsgerät (12) leitungsgeschaltete Signalgabe einrichtet, Informationen beinhalten, die Unterstützung für einen Hochgeschwindigkeits-Downlink-Paketzugangs-Kanal und/oder einen erweiterten dedizierten Uplink-Kanal identifizieren;
Senden der Verbindungsanforderung zu einem Netzwerk-Controller (11).

## Revendications

1. Un dispositif de communication radioélectrique mobile (12) comprenant :
un moyen de détermination si une signalisation à commutation de circuits est en cours d'établissement,
un moyen de génération d'une signalisation de demande connexion comprenant, lorsque ledit dispositif de communication radioélectrique mobile (12) est en train d'établir une signalisation à commutation de circuits, des informations qui identifient un support pour au moins un canal parmi un canal d'accès en mode paquets en liaison descendante haut débit et un canal dédié en liaison montante amélioré, et
un moyen d'envoi de la demande de connexion à un dispositif de commande de réseau (11).

2. Un procédé dans un dispositif de communication radioélectrique mobile (12) comprenant :
la détermination si une signalisation à commutation de circuits est en cours d'établissement,
la génération d'une signalisation de demande de connexion comprenant, lorsque ledit dispositif de communication radioélectrique mobile (12) est en train d'établir une signalisation à commutation de circuits, d'informations qui identifient un support pour au moins un canal parmi un canal d'accès en mode paquets en liaison descendante haut débit et un canal dédié en liaison montante amélioré,
l'envoi de la demande de connexion à un dispositif de commande de réseau (11).
